# EUROPEAN PATENT SPECIFICATION

(11) **EP 2 594 502 B1**
(45) Date of publication and mention of the grant of the patent: **21.02.2018**
(21) Application number: 12188212.0
(22) Date of filing: 11.10.2012
(51) Int. Cl.: B65D 8/10, B65D 8/00

(54) **Container for wine provided with an improved clamping system and a method for forming such**
Behälter für Wein mit einem verbesserten Spannsystem und ein Verfahren zur Herstellung derselben
Récipient pour le vin muni d'un système amélioré de serrage et un procédé de formation d'une telle

(30) Priority: 18.11.2011 IT PD20110362
(43) Date of publication of application: 22.05.2013
(73) Proprietor: Giobatta & Piero Garbellotto S.p.A., 31015 Conegliano (TV) (IT)
(72) Inventor: Garbellotto, Piero, I-31015 Conegliano, TREVISO (IT)
(74) Representative: Mitola, Marco

(56) References cited:
- WO-A1-2010/138954
- BE-A- 341 403
- US-A- 477 174

## Description

The present invention relates to a container for wine, such as a vat or barrel, provided with an improved hooping system and relative hooping method of a container for wine.

The present invention relates, in particular, to containers of a large size which may reach a capacity of up to several hundred hectolitres.

In particular, the container may obviously also be used for other foodstuffs, such as vinegar, which must be kept in the container for years and, preferably, also refined therein.

The refining process takes place by means of the exchange between the substance contained and the inner walls of the container which are made with special woods which have the function of transferring aromas and substances to the liquid contained.

Various types of vats and barrels made by drawing together a plurality of wooden staves around a circumference to form the body of the container, to which lower and upper closure hoops are applied, are known of in the art.

The staves are drawn together sidelong to each other and are pressed circumferentially and radially so as to form a body hermetically tight to the liquid contained therein.

The solutions of the prior art have numerous drawbacks.

In fact, the staves are held together axially by means of the use of metal hoops or metal rings placed on the outer side wall of the container body so as to ensure the mechanical connection of the staves.

The hoops of the prior art envisage the use of metal rings open at the point of a cut identifying a pair of closure flaps facing each other. Said flaps are at least partially overlapped and are blocked in position by means of rivets and/or nails.

Such solutions entail various limitations.

In fact the closure is of the irreversible type, that is to say, if the hoops are to be opened the rivets and/or nails have to be destroyed. In addition, it is not possible to modify the tautness of the hoops in any way over time. It is to be kept in mind that the wood of the staves tends to alter over time and therefore, with the passing of the years, the staves need to be hammered so as to restore the correct tautness thereof. This operation requires great expertise and is therefore quite slow and expensive to perform. Moreover such operation is even more complex if it has to be applied to containers having capacities as high as 1000 hectolitres. Above cited solutions are known, for example, from WO 2010/138954 A1.

The purpose of the present invention is to make a container which overcomes the drawbacks mentioned with reference to the prior art.

Such drawbacks and limitations are resolved by a container according to claim 1 and by a hooping method according to claim 4.

Other embodiments of the present invention are described in the subsequent claims.

Further characteristics and the advantages of the present invention will be evident from the description given below, of its preferred, non-limiting embodiments, wherein:

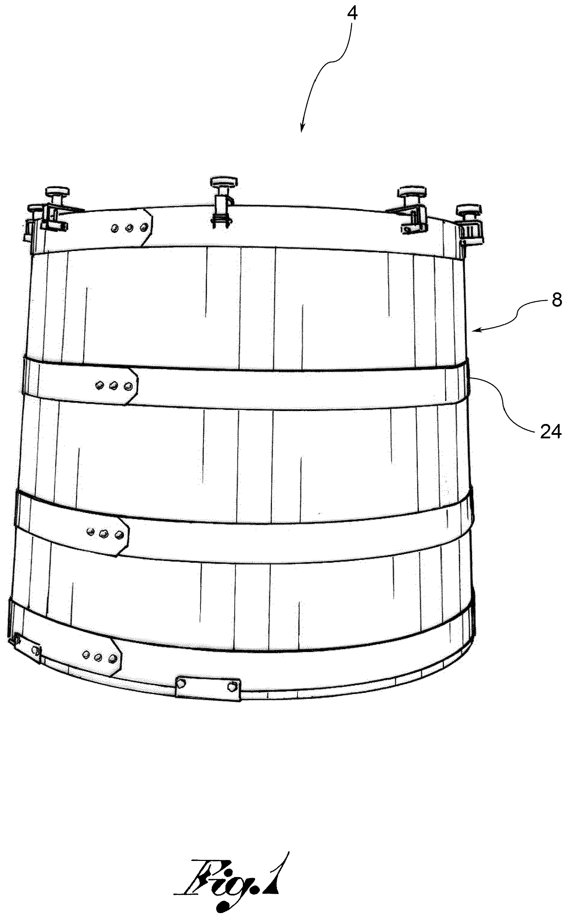

figure 1 shows a perspective view of a vat according to the prior art;

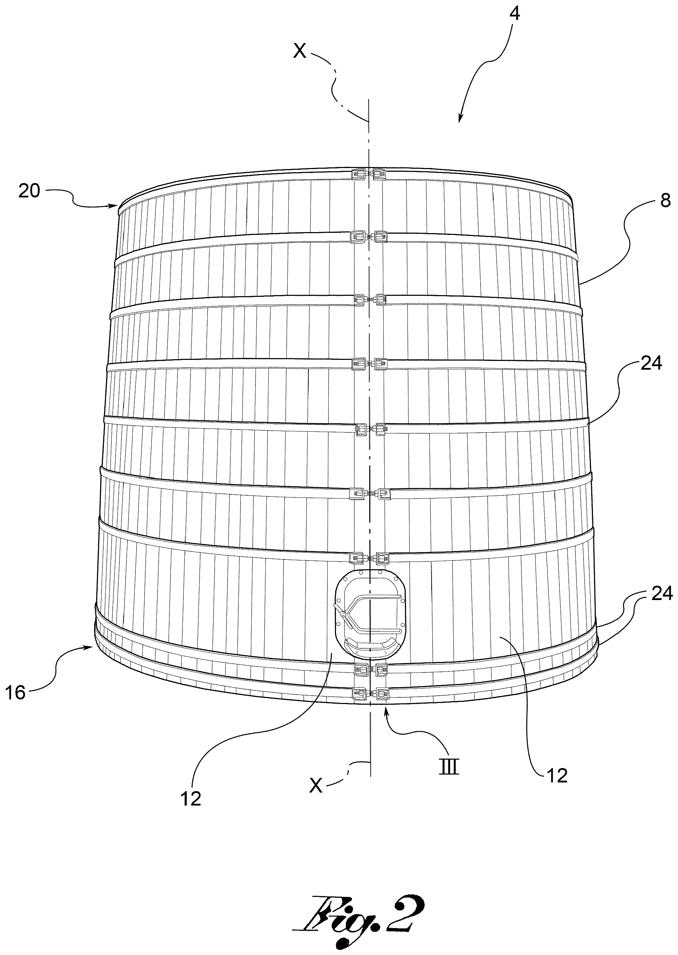

figure 2 shows a perspective view of a container according to one embodiment of the present invention;

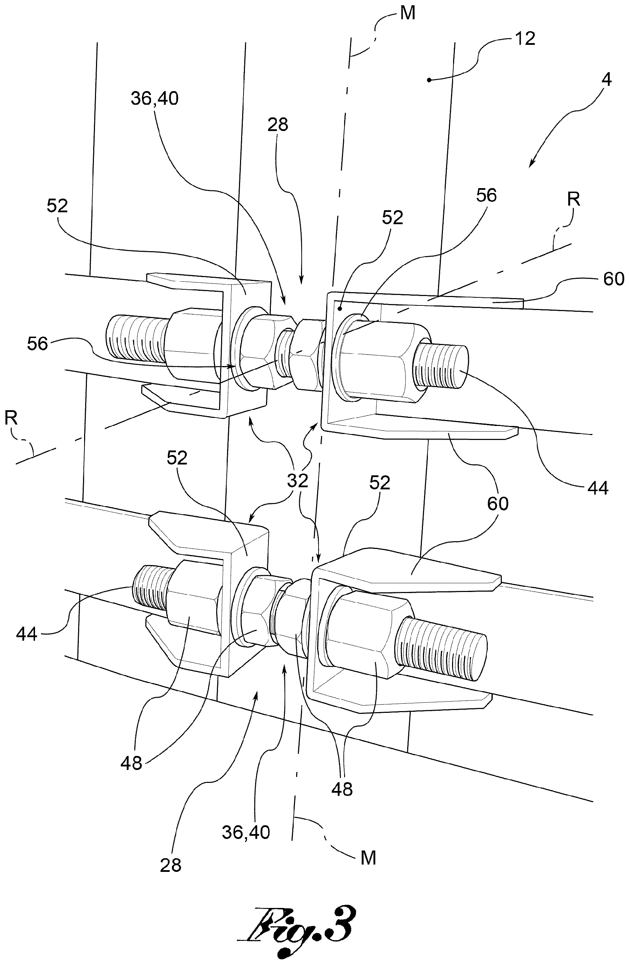

figure 3 shows a perspective view of an enlarged detail III in figure 2;

The elements or parts of elements in common to the embodiments described below will be indicated using the same reference numerals.

With reference to the appended drawings, reference numeral 4 globally denotes a container for wines, such as a vat and/or a barrel, comprising a container body 8 having a plurality of wooden staves 12 positioned in a circumferential arrangement so as to form a closed body axialsymmetric to a main extension axis X-X. Typically the barrel shape, provided with curved staves 12, is suitable for containers having a smaller capacity, while the vat shape, having straight staves 12 so as to form an overall truncated cone shape, is suitable for containers having a greater capacity.

The container body 8 comprises a lower base 16 and/or an upper base 20 suitable for closing at the bottom and/or at the top said container body 8. Said bases 16, 20 may be of any type and are joined to the container body 8 in the known manner.

The container 4 comprises at least one hoop 24 applied externally to the staves 12 so as to compress said staves 12 radially and circumferentially.

A radial direction R-R is understood to mean a direction perpendicular to the main extension axis X-X and incident thereto.

The at least one hoop 24 comprises a circular ring having a discontinuity 28 so as to identify a pair of closure flaps 32 separate from and facing each other.

The closure flaps 32 are mechanically connected to each other by the interposition of adjustable and reversible closure means 36, so as to permit the tightening or drawing together of the closure flaps 32 to reduce the circumference of the hoop 24, or the loosening, or distancing of the closure flaps 32 so as to increase the circumference of the hoop 24.

The closure flaps 32 are aligned with each other in said radial direction R-R perpendicular to the main extension axis X-X and incident thereto, so that the closure flaps 32 do not overlap each other radially,

Said closure means 36 comprise threaded connection means 40, fitted with at least one threaded pin 44 and at least one nut 48 screwed onto said threaded pin 44.

The threaded pin 44 passes through both closure flaps 32 and each closure flap 32 comprises a pair of nuts 48 to permit the adjustment of the tightening and/or loosening of the hoop 24 and to prevent the unscrewing of said nuts.

On at least one closure flap 32 an attachment plate 52 fitted with an attachment hole 56 is provided for the associable threaded pin 44.

Said attachment plate 52 is stiffened by the application of reinforcement gusset plates 60 positioned perpendicular to the attachment plate 52 and to the closure flaps 32.

The attachment plate 52 and the relative reinforcement gusset plates 60 are perpendicular to the closure flaps 32 and extend opposite to the staves 12 so as to permit the insertion of a spanner or pliers to block and/or turn the nuts 48.

In the space identified between said closure flaps 32 facing each other, at least one nut 48 is positioned to permit the adjustment of the circumference and therefore the tightening of the hoop 24.

The closure flaps 32 are positioned so as to interface radially with the same stave 12 of the container body 8.In other words, the closure flaps 32 rest on and interface inside the same stave 12.

The closure flaps 32 are positioned symmetrically in relation to a centreline M-M of said stave 12.

The container according to the present invention may comprise a plurality of hoops 24 depending on its size.

Said hoops may be positioned at a constant axial pitch or distance along the main extension axis X-X.

The choice, distance and number of hoops depend on the type of container. Preferably, but not necessarily, a pair of hoops 24 at a short axial distance or pitch are envisaged at the lower base 16.

The method of assembly of a container according to the invention will now be described.

The hooping method comprises first of all the steps of assembling the staves 12 according to a barrel or vat arrangement so as to make the container body 8.The lower base 16 and/or the upper base 20, suitable for closing at the bottom and/or at the top said container body 8, is then applied. A plurality of hoops 24 are then applied to the container body thus assembled.

The step of applying the hoops 24 comprises drawing the closure flaps 32 together in a radial direction R-R so as to be directly facing each other, inserting at least one threaded pin 44 provided with respective nuts 48 between said attachment holes 56.and the step of final tightening of the nuts 48 so as to establish the right tautness of the hoop 24.

The step of applying the hoops 24 entails positioning the closure flaps 32 inside the same stave 12 so as to distribute the radial hoop pressure evenly over all the staves 12 of the container body 8.

The step of adjusting the tautness of the hoop 24 is then envisaged by acting on the nuts 48, so as to be able to reversibly and repeatedly modify said tautness depending on the ageing and/or conditions of use of the staves 12.

As may be seen from the description, the container and the method according to the invention make it possible to overcome the drawbacks presented in the prior art.

The hooping according the present invention is reversible and removable. In other words, it can be opened, closed again, tightened and loosened at will during the life of the container without ever having to be replaced given that the aforesaid adjustments do not require any destructive cutting of the hoop.

This feature of versatility makes the hoop particularly advantageous and economical. In fact, should the container require tightening of the hoops with the passing of time it will no longer be necessary, as with the nailed or riveted solutions of the prior art, to hammer the staves. In fact, adjustment of the hoops so as to increase or reduce the circumference thereof will be sufficient. These operations can be performed repeatedly and cyclically throughout the useful life of the container. By avoiding the hammering operations the costs of maintenance of the container are considerably reduced.

Thanks to the fact that the closure flaps are radially aligned a uniform radial pressure over all the staves composing the container body is ensured.

Moreover, the positioning of the closure flaps on the same stave also ensures a uniformity of pressure at the closure point of the hoop itself.

Instead, in the prior solution in which the flaps are at least partially overlapped to permit the reciprocal nailing/riveting thereof, the staves near said flaps are not subject to even radial pressure by the hoop.

The evenness of radial pressure is however an extremely important requisite especially for the applications which the present invention mainly regards, namely vats or barrels having a capacity of up to 1000 hectolitres.

It is clear that such containers weigh several tons and therefore the even distribution of pressure is essential for their correct maintenance.

A person skilled in the art may make numerous modifications and variations to the containers and methods described above so as to satisfy contingent and specific requirements while remaining within the scope of protection as defined by the following claims.

## Claims

1. Container (4) for wines, such as a vat and/or a barrel, comprising a container body (8) having a plurality of wooden staves (12) positioned in a circumferential arrangement so as to form a closed body axial-symmetric to a main extension axis (X-X),
- a lower base (16) and/or an upper base (20) suitable for closing at the bottom or at the top said container body (8),
- at least one hoop (24) applied externally to the staves (12) so as to compress said staves (12) radially and circumferentially, the radial direction (R-R) being perpendicular to the main extension axis (X-X) and incident to it,
wherein
- said at least one hoop (24) comprises a circular ring having a discontinuity (28) so as to identify a pair of closure flaps (32) separate from and facing each other,
- said closure flaps (32) being mechanically connected to each other by the interposition of adjustable and reversible closure means (36), so as to permit the tightening or drawing together of the closure flaps (32) to reduce the circumference of the hoop (24), or the loosening, or distancing of the closure flaps (32) to increase the circumference of the hoop (24), wherein said closure means (36) comprise threaded connection means (40), fitted with at least one threaded pin (44) and at least one nut(48) screwed onto said threaded pin (44),
wherein, on at least one closure flap (32) an attachment plate (52) fitted with an attachment hole (56) is provided for the associable threaded pin (44), wherein
said attachment plate (52) is stiffened by the application of reinforcement gusset plates (60) positioned perpendicular to the attachment plate (52) and to the closure flaps (32),
wherein the attachment plate (52) and the relative reinforcement gusset plates (60) are perpendicular to the closure flaps (32) and extend opposite to the staves (12) so as to permit the insertion of a spanner or pliers to block and/or turn the nuts (48),
**characterised by** the fact that
- at least one nut is positioned in the space identified between said closure flaps (32) facing each other to permit the adjustment of the circumference and therefore the tightening of the hoop (24),
wherein the closure flaps (32) are positioned so as to interface radially with the same stave (12) of the container body (8),
wherein the closure flaps (32) are positioned symmetrically in relation to a centreline (M-M) of said same stave (12).

2. Container (4) according to claim 1, wherein the closure flaps (32) are aligned with each other in said radial direction (R-R), said radial direction being perpendicular to the main extension axis (X-X) and incident to it, so that the closure flaps (32) do not radially overlap.

3. Container (4) according to claim 1 or 2, wherein the threaded pin (44) passes through both closure flaps (32) and each closure flap (32) comprises a pair of nuts (48) to permit the adjustment of the tightening and/or loosening of the hoop (24) and to prevent the unscrewing of said nuts.

4. Method of hooping a container according to any of the previous claims, comprising the steps of:
- assembling the staves (12) according to a barrel or vat arrangement so as to make the container body (8),
- applying a lower base (16) and/or an upper base (20) suitable for closing at the bottom and/or at the top said container body (8),
- applying a plurality of hoops (24) to the container body (8) thus assembled,
- wherein the step of applying the hoops (24) comprises drawing the closure flaps (32) together in a radial direction (R-R) so as to be directly facing each other, inserting adjustable and reversible closure means (36) between said closure flaps (32), and the step of final tightening of the closure means (36) so as to establish the correct tautness of the hoop (24),wherein the step of drawing the hoops (24) together entails positioning the closure flaps (32) inside the same stave (12) so as to distribute the radial hoop pressure evenly over all the staves (12) of the container body (8) wherein the method comprises the step of using threaded connection means (40) having at least one threaded pin (44) and at least one nut (48) as closure means (36), and the step of adjusting the tautness of the hoop (24), acting on the nuts (48), so as to be able to reversibly and repeatedly modify said tautness depending on the ageing and/or conditions of use of the staves (12).

## Patentansprüche

1. Behälter (4) für Weine, wie zum Beispiel ein Bottich und/oder ein Fass, umfassend einen Behälterkörper (8) mit einer Mehrzahl von hölzernen Dauben (12), die in einer Umfangsanordnung positioniert sind, um einen geschlossenen Körper axialsymmetrisch zu einer Haupterstreckungsachse (X-X) zu bilden,
- eine untere Basis (16) und/oder eine obere Basis (20), die geeignet ist bzw. sind, den Behälterkörper (8) unten oder oben zu verschließen,
- mindestens einen Fassreif (24), der extern an den Dauben (12) angebracht ist, um die Dauben (12) radial und in Umfangsrichtung zusammenzudrücken, wobei die radiale Richtung (R-R) senkrecht zu der Haupterstreckungsachse (X-X) ist und auf sie auftrifft,
wobei
- der zumindest eine Fassreif (24) einen kreisförmigen Ring mit einer Diskontinuität (28) aufweist, um ein Paar Verschlussklappen (32) zu identifizieren, die voneinander getrennt und einander zugewandt sind,
- die Verschlussklappen (32) durch Zwischenschaltung von einstellbaren und reversiblen Verschlussmitteln (36) mechanisch miteinander verbunden sind, um das Festziehen oder Zusammenziehen der Verschlussklappen (32) zu erlauben, um den Umfang des Fassreifs (24), oder das Lösen oder Distanzieren der Verschlussklappen (32) zu verringern, um den Umfang des Fassreifs (24) zu vergrößern,
wobei die Verschlussmittel (36) Gewindeverbindungsmittel (40) umfassen, die mit mindestens einem Gewindestift (44) und zumindest einer auf den Gewindestift (44) aufgeschraubten Mutter (48) versehen sind,
wobei an mindestens einer Verschlussklappe (32) eine mit einem Anbringungsloch (56) versehene Anbringungsplatte (52) für den assoziierbaren bzw. dazugehörigen Gewindestift (44) bereitgestellt ist,
wobei
die Anbringungsplatte (52) durch die Anwendung von Verstärkungsknotenblechen (60) versteift ist, die senkrecht zu der Anbringungsplatte (52) und zu den Verschlußklappen (32) positioniert sind,
wobei die Anbringungsplatte (52) und die relativen Verstärkungsknotenbleche (60) senkrecht zu den Verschlußklappen (32) sind und sich gegenüberliegend von bzw. entgegengesetzt zu den Dauben (12) erstrecken, um das Einsetzen eines Schraubenschlüssels oder einer Zange zu ermöglichen, um die Muttern (48) zu blockieren und/oder zu drehen,
**gekennzeichnet durch** die Tatsache, dass
- zumindest eine Mutter in dem Raum positioniert ist, der zwischen den einander zugewandten Verschlussklappen (32) identifiziert ist, um die Einstellung des Umfanges und somit das Festziehen des Fassreifs (24) zu erlauben, wobei die Verschlussklappen (32) so positioniert sind, dass sie sich radial mit der gleichen Daube (12) des Behälterkörpers (8) verbinden,
wobei die Verschlussklappen (32) symmetrisch in Bezug auf eine Mittellinie (M-M) der gleichen Daube (12) positioniert sind.

2. Behälter (4) nach Anspruch 1, wobei die Verschlussklappen (32) miteinander in der radialen Richtung (R-R) ausgerichtet sind, wobei die radiale Richtung senkrecht zu der Haupterstreckungsachse (X-X) ist und auf diese auftrifft, so dass die Verschlussklappen (32) nicht radial überlappen.

3. Behälter (4) nach Anspruch 1 oder 2, wobei der Gewindestift (44) durch beide Verschlussklappen (32) verläuft und jede Verschlussklappe (32) ein Paar Muttern (48) umfasst, um die Einstellung des Festziehens und/oder Lockerns des Fassreifs (24) zu erlauben und das Herausdrehen der Muttern zu verhindern.

4. Verfahren zum Umreifen eines Behälters nach einem der vorhergehenden Ansprüche, umfassend die Schritte:
- Montieren der Dauben (12) gemäß einer Fass- oder Bottichanordnung, um den Behälterkörper (8) herzustellen,
- Anbringen einer unteren Basis (16) und/oder einer oberen Basis (20), die geeignet ist bzw. sind, den Behälterkörper (8) unten oder oben zu verschließen,
- Anbringen einer Mehrzahl von Fassreife (24) an dem so montierten Behälterkörper (8),
- wobei der Schritt des Anbringens der Fassreife (24) umfasst: Zusammenziehen der Verschlussklappen (32) in einer radialen Richtung (R-R), so dass sie einander direkt zugewandt sind, Einsetzen von einstellbaren und reversiblen Verschlussmitteln (36) zwischen den Verschlussklappen (32) und den Schritt des endgültigen Festziehens der Verschlussmittel (36), um die richtige Straffheit des Fassreifs (24) herzustellen, wobei der Schritt des Zusammenziehens der Fassreife (24) das Positionieren der Verschlußklappen (32) innerhalb der gleichen Daube (12) umfasst, um den radialen Fassreifdruck gleichmäßig auf alle Dauben (12) des Behälterkörpers (8) zu verteilen, wobei das Verfahren den Schritt des Verwendens von Gewindeverbindungsmitteln (40) mit mindestens einem Gewindestift (44) und mindestens einer Mutter (48) als Verschlussmittel (36) und den Schritt des Einstellens der Straffheit des Fassreifs (24) umfasst, die auf die Muttern (48) wirkt, um in der Lage zu sein, diese Straffheit in Abhängigkeit von der Alterung und/oder den Bedingungen der Verwendung der Dauben (12) reversibel und wiederholt zu modifizieren.

## Revendications

1. Récipient (4) pour des vins, tels qu'un fût et/ou un tonneau, comprenant un corps de récipient (8) présentant une pluralité de lattes en bois (12) positionnées dans un agencement circonférentiel de sorte à former un corps fermé de manière axialement symétrique à un axe d'extension principal (X-X),
- une base inférieure (16) et/ou une base supérieure (20) adaptée pour fermer sur le fond ou sur le dessus ledit corps de récipient (8),
- au moins un cerceau (24) appliqué à l'extérieur des lattes (12) de sorte à compresser lesdites lattes (12) radialement et sur la circonférence, la direction radiale (R-R) étant perpendiculaire à l'axe d'extension principal (X-X) et incidente à celui-ci,
dans lequel
- ledit au moins un cerceau (24) comprend un anneau circulaire présentant une discontinuité (28) de sorte à identifier une paire de volets de fermeture (32) séparés et se faisant face l'un à l'autre,
- lesdits volets de fermeture (32) étant raccordés mécaniquement l'un à l'autre par l'interposition de moyens de fermeture (36) ajustables et réversibles de sorte à permettre le serrage ou l'étirage ensemble des volets de fermeture (32) pour réduire la circonférence du cerceau (24), ou le détachement ou l'éloignement des volets de fermeture (32) pour augmenter la circonférence du cerceau (24),
dans lequel lesdits moyens de fermeture (36) comprennent des moyens de connexion filetés (40), dotés d'au moins une tige filetée (44) et au moins un écrou (48) vissé sur ladite tige filetée (44),
dans lequel sur au moins un volet de fermeture (32) une plaque d'attache (52) dotée d'un trou d'attache (56) est prévue pour la tige filetée (44) associable,
dans lequel
ladite plaque d'attache (52) est renforcée par l'application de plaques de gousset de renforcement (60) positionnées perpendiculairement à la plaque d'attache (52) et aux volets de fermeture (32),
dans lequel la plaque d'attache (52) et les plaques de gousset de renforcement relatif (60) sont perpendiculaires aux volets de fermeture (32) et s'étendent à l'opposé des lattes (12) de sorte à permettre l'insertion d'une clé ou d'une pince pour bloquer et/ou tourner les écrous (48),
**caractérisé par le fait que**
- au moins un écrou est positionné dans l'espace identifié entre lesdits volets de fermeture (32) se faisant face l'un à l'autre pour permettre l'ajustement de la circonférence et par conséquent le serrage du cerceau (24),
dans lequel les volets de fermeture (32) sont positionnés de sorte à faire interface radialement avec la même latte (12) du corps de récipient (8),
dans lequel les volets de fermeture (32) sont positionnés symétriquement par rapport à une ligne centrale (M-M) de ladite même latte (12).

2. Récipient (4) selon la revendication 1, dans lequel les volets de fermeture (32) sont alignés l'un sur l'autre dans ladite direction radiale (R-R), ladite direction radiale étant perpendiculaire à l'axe d'extension principal (X-X) et incidente à celui-ci de sorte que les volets de fermeture (32) ne se recouvrent pas radialement.

3. Récipient (4) selon la revendication 1 ou 2, dans lequel la tige filetée (44) passe au travers des deux volets de fermeture (32) et chaque volet de fermeture (32) comprend une paire d'écrous (48) pour permettre l'ajustement du serrage et/ou du détachement du cerceau (24) et pour empêcher le dévissage desdits écrous.

4. Procédé de cerclage d'un récipient selon l'une quelconque des revendications précédentes, comprenant les étapes de :
- assemblage des lattes (12) selon un agencement de tonneau ou de fût de sorte à fabriquer le corps de récipient (8),
- application d'une base inférieure (16) et/ou une base supérieure (20) adaptée pour fermer sur le fond et/ou le dessus ledit corps de contenant (8),
- application d'une pluralité de cerceaux (24) au corps de récipient (8) ainsi assemblé,
- dans lequel l'étape d'application des cerceaux (24) comprend l'étirage des volets de fermeture (32) ensemble dans une direction radiale (R-R) de sorte à être directement en face les uns des autres,
l'insertion des moyens de fermeture (36) ajustables et réversibles entre lesdits volets de fermeture (32), et l'étape de serrage final des moyens de fermeture (36) de sorte à établir la tension correcte du cerceau (24), dans lequel l'étape d'étirage des cerceaux (24) ensemble entraîne le positionnement des volets de fermeture (32) dans la même latte (12) de sorte à distribuer la pression de cerceau radiale uniformément sur toutes les lattes (12) du corps de récipient (8) dans lequel le procédé comprend l'étape d'utilisation de moyens de connexion filetés (40) présentant au moins une tige filetée (44) et au moins un écrou (48) comme moyens de fermeture (36), et l'étape d'ajustement de la tension du cerceau (24), agissant sur les écrous (48) de sorte à pouvoir modifier de manière réversible et répétée ladite tension selon le vieillissement et/ou les conditions d'utilisation des lattes (12).
